# EUROPEAN PATENT APPLICATION

(11) **EP 4 823 154 A1**
(43) Date of publication of application: **14.10.2026**
(21) Application number: 26171439.8
(22) Date of filing: 09.04.2026
(51) Int. Cl.: H04W 24/02, H04L 41/0803

(54) **MANAGEMENT OF NETWORK DEVICES IN AN AUTOMATED FREQUENCY COORDINATION SYSTEM**

(30) Priority: 11.04.2025 US 202563787497 P; 05.03.2026 US 202619558044
(71) Applicant: Juniper Networks, Inc., Sunnyvale, CA 94089-1206 (US)
(72) Inventor: WANG, Wenfeng, Sunnyvale, 94089 (US); ROSENTHAL, Joshua, Sunnyvale, 94089 (US); MUSANTE, John James, Sunnyvale, 94089 (US); WRIGHT, Christopher Wesley, Sunnyvale, 94089 (US); SINGH, Gurpreet, Sunnyvale, 94089 (US); SHINDE, Amit, Sunnyvale, 94089 (US); PURVIS, Wesley, Sunnyvale, 94089 (US)
(74) Representative: Marks & Clerk LLP

(57) **Abstract**

Techniques are described for management of one or more network devices of a network based on one or more operational constraints in an Automated Frequency Coordination (AFC) system. For example, a network management system (NMS) is configured to obtain location information of the one or more network devices and sends the location information of the one or more network devices to the AFC server. The AFC server may determine one or more operational constraints for the one or more network devices and sends the one or more operational constraints to the NMS, which in turn may determine one or more configuration settings for the one or more network devices based on the one or more operational constraints and one or more network parameters, and send the one or more configuration settings to the one or more network devices.

## Description

This application claims the benefit of US Patent Application No. 19/558,044, filed 5 March 2026, which claims the benefit of US Provisional Patent Application No. 63/787,497, filed 11 April 2025, the entire content of each application is incorporated herein by reference.

### BACKGROUND

Commercial sites or premises, such as offices, hospitals, airports, stadiums, or retail outlets, often include a network of wireless access points (APs) installed throughout the sites to provide wireless network services to one or more wireless client devices. APs enable client devices to wirelessly connect to a wired network using various wireless networking protocols and technologies, such as wireless local area networking protocols conforming to one or more of the IEEE 802.11 standards (i.e., "Wi-Fi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network.

Network devices, such as APs, may utilize one or more frequency bands, such as 2.4 GHz, 5GHz, 6 GHz, etc. To limit interference between network devices that operate within one or more of the frequency bands, such as 6 GHz, a regulatory body, such as Federal Communications Commission (FCC), European Conformity (CE), or other regulatory bodies may specify one or more operational constraints for the network devices, such as operating frequencies (e.g., range of frequencies of a channel) and power limits (e.g., Equivalent Isotropic Radiated Power (EIRP)) to limit interference between network devices operating in the frequencies or channels.

### BRIEF DESCRIPTION OF THE DRAWINGS

FIG. 1 is a block diagram of an example network system configured to manage one or more network devices of a network based on one or more operational constraints of an AFC system, in accordance with one or more techniques of the disclosure.
FIG. 2 is a block diagram of an example access point device, in accordance with one or more techniques of the disclosure.
FIG. 3 is a block diagram of an example network management system configured to manage one or more network devices of a network based on one or more operational constraints of an AFC system, in accordance with one or more techniques of the disclosure.
FIG. 4 is a block diagram of an example user equipment device, in accordance with one or more techniques of the disclosure.
FIG. 5A is a flowchart of an example operation to manage a network device with a GPS module based on one or more operational constraints of an AFC system, in accordance with one or more techniques of the disclosure.
FIG. 5B is a flowchart of an example operation to manage a network device without a GPS module based on one or more operational constraints of an AFC system, in accordance with one or more techniques of the disclosure.
FIG. 5C is a flowchart of an example operation to manage a network device based on one or more operational constraints of an AFC system, in accordance with one or more techniques of this disclosure.

### DETAILED DESCRIPTION

In general, this disclosure describes techniques for a network management system (NMS) configured to manage one or more network devices of a network based on one or more operational constraints of an Automated Frequency Coordination (AFC) system. For example, for a network device (e.g., an access point and/or a fixed client device) to operate in a 6 GHz frequency band (e.g., in accordance with the IEEE 802.11be standard), the network device is validated by and/or registered with an AFC server configured to manage access by one or more network devices in the 6 GHz frequency band. The AFC server may obtain information from the network device, such as a location (e.g., coordinates, height, etc.) of the network device and, in some examples, planned frequencies or power to be used by the network device (referred to as "validation information") and determines available frequencies and/or power limits for the network device to operate at the location of the network device (referred to as "operational constraints") based on the validation information.

In some examples, a network device may not have a global positioning satellite (GPS) module to determine the location of the network device or the location of the network device is unable to be determined or is inaccurately determined (e.g., when the network device is located indoor), and the location of the network device is unable to be provided (or an inaccurate location is provided) to the AFC server, which may cause the AFC server to fail to provide, or incorrectly provide, one or more operational constraints to operate in the frequency band.

In some examples, the configuration of a plurality of network devices of a site based on the one or more operational constraints may be unbalanced, which may cause a reduction in performance in the network. In some examples, the AFC server may provide a variety of frequencies or channels for the network devices. In these examples, each of the network devices typically select a frequency and/or channel at random to be implemented, which may not be the most ideal configuration for network performance for the site. In some examples, the AFC server may provide a power limit that may overlap in either the low power mode or the standard power mode. Network devices that may support either a standard power mode or a low power mode (e.g., Low Power Indoor (LPI)) may typically select the power mode at random to implement, which may cause a reduction in performance in the network.

In accordance with the techniques of the disclosure, the NMS may manage the configuration of one or more network devices of a network based on one or more operational constraints of an AFC system. For example, the NMS may determine the location of one or more network devices (e.g., with or without a GPS module), and send location information of the one or more network devices, including other validation information, to the AFC server. In some examples, the NMS may receive location information of a network device including a GPS module. In other examples, the NMS may determine a location of a network device without a GPS module based on a location of one or more other network devices with a GPS module (e.g., neighboring network device, network device within the same site, etc.). In some examples, the NMS may determine the location of a device based on signal strength measurements of one or more signals exchanged between the network device and a neighboring network device. The NMS sends location information of the network device to the AFC server and may receive one or more operational constraints for the network device from the AFC server.

Based on the one or more operational constraints for the network device, the NMS may manage one or more configuration settings for the network device. For example, the NMS may determine one or more configuration settings for a network device based on one or more constraints from the AFC server and one or more network parameters, such as a type (e.g., model) of the network device and/or one or more assessments of the network (e.g., whether there is a coverage hole, whether one or more neighboring devices that may interfere with the network device based on a determined location of the one or more neighboring network devices, client connectivity to the network device, capability of the network device, demand of the network device, feedback on the performance of the network, etc.).

In some examples, the NMS may generate a channel and/or power distribution for a plurality of network devices. For example, the NMS may generate a power distribution for the plurality of network devices to operate in low power mode or standard power mode. The NMS may determine a first set of network devices of the plurality of network devices to operate in low power mode and a second set of network devices of the plurality of network devices to operate in standard power mode. The NMS may additionally, or alternatively, generate a channel distribution for the plurality of network devices to operate in corresponding channels. For, example, the NMS may determine a first set of network devices of the plurality of network devices to operate in a first channel, a second set of network devices of the plurality of network devices to operate in a second channel, and so on.

The techniques of this disclosure provide one or more technical advantages and practical applications. For example, by configuring a NMS to manage one or more configuration settings for network devices in an AFC system, the NMS may determine configuration settings based on one or more operational constraints from the AFC server and one or more network parameters. The configuration settings would not only comply with the operational constraints of the AFC system, but may also improve the performance of the network. Moreover, by generating a channel and/or power distribution for a plurality of devices, the NMS may provide a more balanced distribution of channel and/or power that may otherwise be unbalanced if network devices individually manage the configuration settings. Additionally, by determining a location of a network device without a GPS unit based on a location of one or more other network devices with a GPS unit (e.g., neighboring network device, network device within the same site, etc.) or determining the location of a device based on signal strength measurements of one or more signals exchanged between the network device and a neighboring network device, the NMS may provide, to the AFC server, the location of the network device that is typically unable to be determined or is inaccurately determined, which enables the AFC server to accurately and/or correctly determine available frequencies and/or power limits for the network device to operate at the location of the network device.

The details of one or more examples of the techniques of this disclosure are set forth in the accompanying drawings and the description below. Other features, objects, and advantages of the techniques will be apparent from the description and drawings, and from the claims.

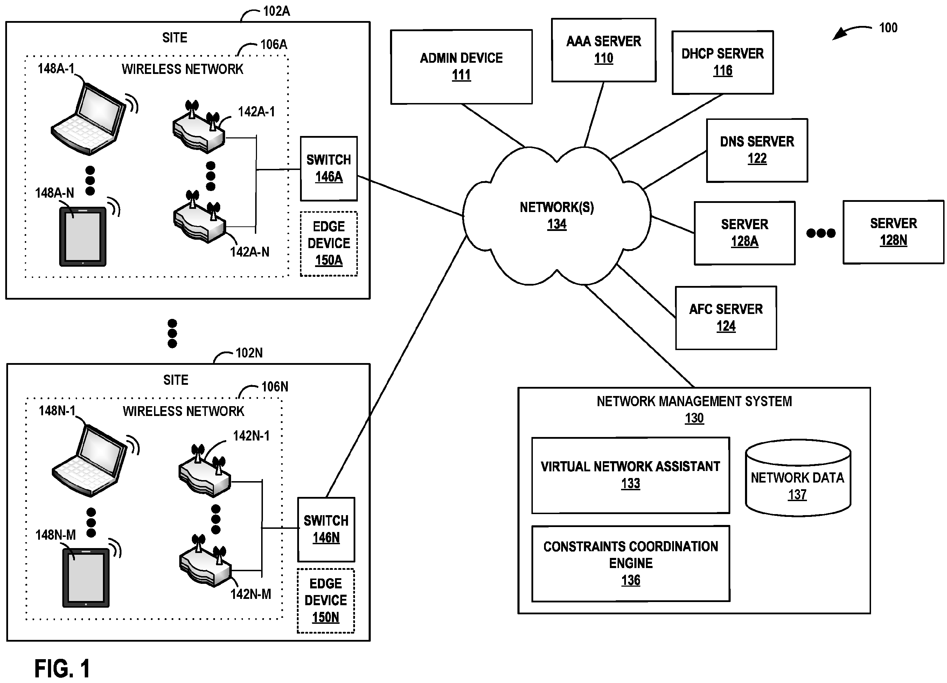

FIG. 1 is a block diagram of an example network system 100 configured to manage a network device of a network based on one or more operational constraints of an AFC system, in accordance with one or more techniques of this disclosure. Example network system 100 includes a plurality sites 102A-102N at which a network service provider manages one or more wireless networks 106A-106N, respectively. Although each of sites 102A-102N is shown in FIG. 1 as including a single wireless network 106A-106N, respectively, in some examples, each of sites 102A-102N may include multiple wireless networks, and the disclosure is not limited in this respect.

Each of sites 102A-102N includes a plurality of network devices, such as access points (APs) 142, switches 146, or routers (not shown) within the wired network edge. For example, site 102A includes a plurality of APs 142A-1 through 142A-N. Similarly, site 102N includes a plurality of APs 142N-1 through 142N-M. Each AP 142 may be any type of wireless access point, including, but not limited to, a commercial or enterprise AP, a router, or any other device that is connected to the wired network and is capable of providing wireless network access to client devices within the site. References to "N" or "M" may represent any number. References to "N" for different elements need not be the same number. Similarly, references to "M" for different elements need not be the same number.

Each of sites 102A-102N also includes a plurality of client devices, otherwise known as user equipment devices (UEs), representing various wireless-enabled devices within each site. For example, a plurality of UEs 148A-1 through 148A-N are currently located at site 102A. Similarly, a plurality of UEs 148N-1 through 148N-M are currently located at site 102N. Each of UEs 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, or the like) via physical cables, e.g., Ethernet cables. In the example of FIG. 1, site 102A includes a switch 146A to which each of APs 142A-1 through 142A-N at site 102A are connected. Similarly, site 102N includes a switch 146N to which each of APs 142N-1 through 142N-M at site 102N are connected. Although illustrated in FIG. 1 as if each site 102 includes a single switch 146 and all APs 142 of the given site 102 are connected to the single switch 146, in other examples, each site 102 may include more or fewer switches and/or routers. In addition, the APs and the other wired client-side devices of the given site may be connected to two or more switches and/or routers. In addition, two or more switches at a site may be connected to each other and/or connected to two or more routers, e.g., via a mesh or partial mesh topology in a hub-and-spoke architecture. In some examples, interconnected switches and routers comprise wired local area networks (LANs) at sites 102 hosting wireless networks 106.

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, an Automated Frequency Coordination (AFC) server 124, a plurality of servers 128A-128N (collectively "servers 128") (e.g., web servers, databases servers, file servers, application servers, and the like), and a network management system (NMS) 130. As shown in FIG. 1, the various devices and systems of network 100 are coupled together via one or more network(s) 134, e.g., the Internet and/or an enterprise intranet.

AFC server 124 may manage access by one or more network devices in one or more frequency bands. For example, AFC server 124 may include a database configured to store information associated with registered network devices operating in a 6 GHz frequency band. The information may include geolocation, operating frequencies, power levels, antenna coverage, and/or other information associated with the network devices operating in the one or more frequency bands. As further described below, AFC server 124 may obtain information of a network device, such as location information of AP 142A-1, via NMS 130 and may determine one or more operational constraints for AP 142A-1 based on the information of AP 142A-1. The operational constraints may include operating frequencies or channels and power limits (e.g., antenna transmit power) to limit interference between AP 142A-1 and other network devices operating in the 6 GHz frequency band. As further described below, AFC server 124 may provide one or more operational constraints for AP 142A-1 to NMS 130, and NMS 130 may manage one or more configuration settings for AP 142A-1 based on the one or more operational constraints from AFC server 124.

In the example of FIG. 1, NMS 130 is a cloud-based computing platform that manages wireless networks 106A-106N at one or more of sites 102A-102N. As further described herein, NMS 130 provides an integrated suite of management tools and implements various techniques of this disclosure. In some examples, NMS 130 may be provided as-a-service (aaS), in that NMS 130 may be offered as part of an ongoing, subscription-based service to provide network management, analysis, and failure remediation tools to a customer operating one or more sites 102 over a network, such as network(s) 134. In general, NMS 130 may provide a cloud-based platform for wireless network data acquisition, monitoring, activity logging, reporting, predictive analytics, location determination, network anomaly identification, alert generation, and/or management of radio resources. In some examples, NMS 130 outputs notifications, such as alerts, alarms, graphical indicators on dashboards, log messages, text / short messaging service (SMS) messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111. In some examples, NMS 130 may comprise one or more computing devices, dedicated servers, virtual machines, containers, services, or other forms of environments for performing the techniques described herein.

The admin device 111 may comprise a computing device of IT personnel and/or administrator associated with one or more of sites 102 and/or switches 146 at the wired network edge. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a smart phone, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of the network devices, e.g., APs 142, switches 146, or routers, may connect to corresponding edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices while using NMS 130 and its distributed software architecture for scalable and resilient operations, management, troubleshooting, and analytics.

Each one of the network devices of network system 100, e.g., servers 110, 116, 122, and/or 128, APs 142, UEs 148, switches 146, and any other servers or devices attached to or forming part of network system 100, may include a system log or an error log unit wherein each one of these network devices records the status of the network device including normal operational status and error conditions. Throughout this disclosure, one or more of the network devices of network system 100, e.g., servers 110, 116, 122 and/or 128, APs 142, UEs 148, and switches 146, may be considered "third-party" network devices when owned by and/or associated with a different entity than NMS 130 such that NMS 130 does not receive, collect, or otherwise have access to the recorded status and other data of the third-party network devices. In some examples, edge devices 150 may provide a proxy through which the recorded status and other data of the third-party network devices may be reported to NMS 130.

In some examples, NMS 130 monitors network data 137 received from wireless networks 106A-106N at each site 102A-102N, respectively, and manages network resources, such as APs 142 at each site, to deliver a high-quality wireless experience to end users, loT devices, and clients at the site. For example, NMS 130 may include a virtual network assistant (VNA) 133 that implements an event processing platform for providing real-time insights and simplified troubleshooting for IT operations, and automatically takes corrective action or provides recommendations to proactively address wired or wireless network issues. VNA 133 may, for example, include an event processing platform configured to process hundreds or thousands of concurrent streams of network data 137 from sensors and/or agents associated with APs 142 and/or nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause or contributor of error conditions detected or predicted from the streams of network data 137. If the root cause or contributor may be automatically resolved, VNA 133 may invoke one or more corrective actions to correct the root cause or contributor of the error condition, thus automatically improving the underlying SLE metrics and also automatically improving the user experience. Computational resources and components implementing VNA 133 may be part of the NMS 130, may execute on other servers or execution environments, or may be distributed to nodes within network 134 (e.g., routers, switches, controllers, gateways, and the like).

Further example details of operations implemented by the VNA 133 of NMS 130 are described in U.S. Patent No. 9,832,082, issued November 28, 2017, and entitled "Monitoring Wireless Access Point Events," U.S. Patent No. 11,570,038, issued January 31, 2023, and entitled "Network System Fault Resolution via a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements," all of which are incorporated herein by reference in their entirety.

Network devices, such as APs 142 and or wired UEs 148, may utilize one or more frequency bands, such as 2.4 GHz, 5GHz, 6 GHz, etc. To avoid interference between network devices that operate within one or more of the frequency bands, such as 6 GHz, network devices is validated by and/or registered with an AFC server, such as AFC server 124, to operate in the 6 GHz frequency band. Typically, a network device may provide information to an AFC server, such as a location (e.g., coordinates or other geolocation information) of the network device and, in some examples, planned frequencies or power to be used by the network device (referred to as "validation information"). Based on the validation information of the network device, AFC server 124 may provide one or more operational constraints for the network device to operate at the location of the network device, and the network device may be configured to operate according to the one or more operational constraints.

In some examples, a network device may not have a GPS unit to determine the location of the network device or the location of the network device is unable to be determined or is inaccurately determined (e.g., when the network device is located indoor), and the location of the network device is unable to be provided (or an inaccurate location is provided) to AFC server 124, which may cause AFC server 124 to fail to provide, or incorrectly provide, one or more operational constraints to operate in the frequency band.

In some examples, the configuration of a plurality of network devices of a site based on the one or more operational constraints may be unbalanced, which may cause a reduction in performance in the network. For example, each network device of a plurality of network devices at the site may receive a variety of allowed frequencies and/or channels in which the network device can operate. Each network device may typically select one of the frequencies and/or channels at random to implement, which may not be a configuration for the site to provide ideal network performance.

In some examples, a site may include a plurality of different types of network devices that each support different power modes. In these examples, a site, such as site 102A, may include certain network devices that support either a standard power mode (e.g., 0 dBm to 30 dBm) and/or a low power mode (Low Power Indoor (LPI)) (e.g., 0 dBm to 15 dBm). AFC server 124 may, in some instances, provide a power constraint (e.g., power limit of 14 dBm) that may overlap in either the low power mode or the standard power mode. In these examples, each of the plurality of network devices may typically select the power mode at random to implement, which may cause a reduction in performance in the network.

In accordance with the techniques described in this disclosure, NMS 130 includes a constraints coordination engine 136 that is configured to manage one or more network devices of a network based on one or more operational constraints of AFC server 124. In the example of FIG. 1, constraints coordination engine 136 of NMS 130 may send validation information of one or more network devices, such as AP 142A-1, to AFC server 124 to manage operational constraints of the one or more network devices in a 6 GHz frequency band.

In some examples, constraints coordination engine 136 may receive location information of a network device including a GPS unit. For example, AP 142A-1 may include a GPS unit and may send location information of AP 142A-1 to constraints coordination engine 136. In some examples, NMS 130 (or a location engine connected to NMS 130) may determine a location of a network device without a GPS unit based on a location of one or more other network devices with a GPS unit (e.g., neighboring network device, network device in the same site, etc.). For example, NMS 130 may determine a location of AP 142A-N that does not include a GPS unit based on the location information of AP 142A-1 that includes a GPS unit. Constraints coordination engine 136 may set the location of AP 142A-N as the same location as AP 142A-1. In some examples, NMS 130 may determine the location of a network device without a GPS unit based on measuring signals exchanged between AP 142A-N and a neighboring network device. For example, NMS 130 may determine the location of AP 142A-N based on signal strength measurements of one or more signals exchanged between AP 142A-N and AP 142A-1. In other examples, NMS 130 may determine the location of AP 142A-N based on round-trip time (RTT) and/or Fine Timing Measurement (FTM) of one or more signals exchanged between AP 142A-N and AP 142A-1.

Additional examples of location determination are described in U.S. Patent No. 10, 219,166, entitled "METHODS AND APPARATUS FOR GENERATING, TRANSMITTING AND/OR USING BEACONS," U.S. Patent No. 9,743,254, entitled "METHODS AND APPARATUS RELATING TO THE USE OF RECEIVED SIGNALS TO DETERMINE WIRELESS TERMINAL LOCATION AND/OR REFINE LOCATION DETERMINATION MODELS," U.S. Patent No. 10,976,406, entitled "MULTI-LAYER STATISTICAL WIRELESS TERMINAL LOCATION DETERMINATION," U.S. Patent No. 11,422,224, entitled "LOCATION DETERMINATION BASED ON PHASE DIFFERENCES," U.S. Patent No. 11,696,092, entitled "MULTI-WIRELESS DEVICE LOCATION DETERMINATION," U.S. Patent No. 11,778,418, entitled "ALIGNED MULTI-WIRELESS DEVICE LOCATION DETERMINATION," U.S. Patent No. 12,004,045, entitled "DETERMINING LOCATION BASED ON DYNAMIC PATH LOSS EXPONENT (PLE) AND INTERCEPT (INT) ESTIMATION," the entire contents of each of which is incorporated by reference herein.

Constraints coordination engine 136 of NMS 130 sends location information of one or more of APs 142, including, in some examples, a location uncertainty value that indicates an amount of uncertainty of the location of the one or more APs 142, to AFC server 124 and may receive one or more operational constraints from AFC server 124 for one or more of APs 142. Based on the one or more operational constraints for one or more of APs 142, constraints coordination engine 136 may manage configuration settings for one or more of APs 142. For example, constraints coordination engine 136 may determine configuration settings for a network device based on one or more constraints from the AFC server and one or more network parameters, such as a type (e.g., model) of the network device and/or one or more assessments of the network (e.g., whether there is a coverage hole, one or more neighboring devices that may interfere with the network device based on a determined location of the one or more neighboring network devices, client connectivity to the network device, capability of the network device, demand of the network device, feedback on the performance of the network, etc.).

For example, constraints coordination engine 136 may receive a frequency (or a range of frequencies of a channel) for AP 142A-1 from AFC server 124. Constraints coordination engine 136 may determine the capability of AP 142A-1 to support the frequency based on the model of AP 142A-1. In this example, AP 142A-1 may support a given channel range. Constraints coordination engine 136 may determine a frequency for AP 142A-1 to implement that is within the channel range that is supported by AP 142A-1 and also complies with the frequency constraint for AP 142A-1 received from AFC server 124. Additionally, or alternatively, constraints coordination engine 136 may receive a power limit for AP 142A-1 from AFC server 124. Constraints coordination engine 136 may determine the capability of AP 142A-1 to support the power limit based on the model of AP 142A-1. In this example, AP 142A-1 may support a given power range. Constraints coordination engine 136 may determine a power for AP 142A-1 to implement that is within the power range that is supported by AP 142A-1 and also complies with the power limit for AP 142A-1 received from AFC server 124.

In some examples, constraints coordination engine 136 may receive a power limit for AP 142A-1 from AFC server 124 that may be in a power range for both a standard power mode and low power mode. For example, constraints coordination engine 136 may receive a power limit of 14 dBm that may be within the power range of the standard power mode (e.g., 0 dBm to 30 dBm) and the low power mode (e.g., 0 dBm to 15 dBm). In this example, constraints coordination engine 136 may determine which power mode for AP 142A-1 to implement based on network parameters, such as client connectivity to AP 142A-1, demand (e.g., usage and/or priority of AP 142A-1), or other network parameters. For instance, constraints coordination engine 136 may determine that a number of client devices connected to AP 142A-1 satisfies a threshold, which may indicate AP 142A-1 has a high client connectivity. In this example, constraints coordination engine 136 may determine to implement a standard power mode for AP 142A-1 to enable AP 142A-1 to provide stronger connectivity for the client devices.

In some examples, constraints coordination engine 136 may generate a channel and/or power distribution for a plurality of network devices. For example, constraints coordination engine 136 may determine a first set of network devices in site 102A (e.g., AP 142A-N) to operate in low power mode and a second set of network devices in site 102Ato operate in standard power mode (e.g., AP 142A-1). Constraints coordination engine 136 may additionally, or alternatively, generate a channel distribution for the plurality of network devices to operate in corresponding channels. For, example, constraints coordination engine 136 may determine a first set of network devices in site 102A to operate in a first channel, a second set of network devices in site 102A to operate in a second channel, and so on.

In some examples, constraints coordination engine 136 may configure a network device to switch power modes (e.g., switching from standard power mode to low power mode) or to disable the radio (e.g., transmitter) of the network device when re-requesting for one or more operational constraints for the network device if constraints coordination engine 136 does not receive a response from AFC server 124 or determines that the network device has moved to a different location. For example, AP 142A-1 may be configured to implement a standard power mode for a specified period of time, such as a period of time as specified by regulations (e.g., less than or equal to 24 hours), and to renew a request for one or more operational constraints from AFC server 124. Upon expiration of the specified period of time, constraints coordination engine 136 may send validation information of AP 142A-1 to AFC server 124 to obtain one or more operational constraints for AP 142A-1. If constraints coordination engine 136 does not receive a response from AFC server 124, constraints coordination engine 136 may configure AP 142A-1 to implement a low power mode or disable the radio. Alternatively, if AP 142A-1 does not receive configuration settings from constraints coordination engine 136 (e.g., due to a connection issue to NMS 130), AP 142A-1 may implement a low power mode or to disable the radio. In some examples, constraints coordination engine 136 may change the specified period of time to implement configuration settings. For example, constraints coordination engine 136 may shorten the specified period of time to implement configuration settings based on an amount of uncertainty of a determined location of a network device. For instance, constraints coordination engine 136 may determine the location of AP 142A-N and may generate a location uncertainty value associated with the location of AP 142A-N. Constraints coordination engine 136 may compare the location uncertainty value associated with the location of AP 142A-N with a threshold and if the location uncertainty value satisfies the threshold, constraints coordination engine 136 may shorten the specified period of time for AP 142A-N to implement configuration settings.

While the examples described above are described with respect to managing the configuration settings of APs 142 in an AFC system, the techniques described in this disclosure may also apply to any of client devices 148 that are fixed (e.g., stationary).

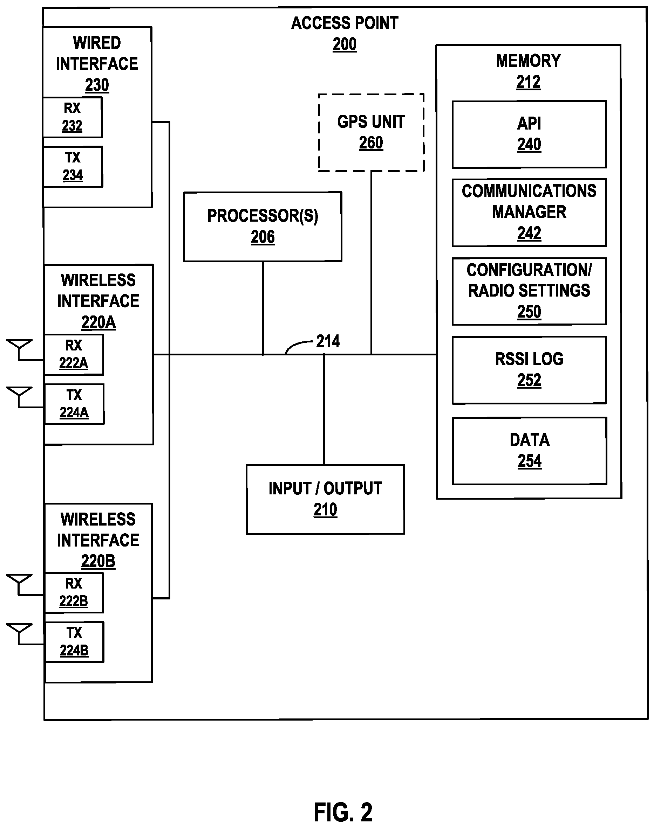

FIG. 2 is a block diagram of an example access point (AP) device 200, in accordance with one or more techniques of the disclosure. Example AP device 200 shown in FIG. 2 may be an example of any of AP devices 142 as shown and described herein with respect to FIG. 1. AP device 200 may comprise, for example, a Wi-Fi, Bluetooth and/or Bluetooth Low Energy (BLE) base station or any other type of wireless access point.

In the example of FIG. 2, access point device 200 includes a wired interface 230, wireless interfaces 220A-220B, one or more processor(s) 206, memory 212, and input/output 210 coupled together via a bus 214 over which the various elements may exchange data and information. Wired interface 230 represents a physical network interface and includes a receiver 232 and a transmitter 234 for sending and receiving network communications, e.g., packets. Wired interface 230 couples, either directly or indirectly, AP device 200 to one or more devices of network(s) 134 of FIG. 1. First and second wireless interfaces 220A and 220B represent wireless network interfaces and include receivers 222A and 222B, respectively, each including a receive antenna via which AP device 200 may receive wireless signals from wireless communications devices, such as UEs 148 of FIG. 1. First and second wireless interfaces 220A and 220B further include transmitters 224A and 224B, respectively, each including transmit antennas via which AP device 200 may transmit wireless signals to wireless communications devices, such as UEs 148 of FIG. 1. In some examples, first wireless interface 220A may include a Wi-Fi 802.11 interface (e.g., 2.4 GHz, 5 GHz, 6GHz, or other wireless communication frequency) and second wireless interface 220B may include a Bluetooth interface and/or a Bluetooth Low Energy (BLE) interface.

Processor(s) 206 are programmable hardware-based processors configured to execute software instructions, such as those used to define a software or computer program, stored to a computer-readable storage medium (such as memory 212), such as non-transitory computer-readable mediums including a storage device (e.g., a disk drive, or an optical drive) or a memory (such as Flash memory or RAM) or any other type of volatile or non-volatile memory, that stores instructions to cause the one or more processors 206 to perform one or more of the techniques described herein.

Memory 212 includes one or more devices configured to store programming units/modules and/or data associated with operation of access point device 200. For example, memory 212 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 206 to perform one or more of the techniques described herein.

In this example, memory 212 stores executable software and various data including an application programming interface (API) 240, a communications manager 242, configuration settings 250, RSSI log 252, and data storage 254. RSSI log 252 includes RSSI values measured by AP device 200 and/or RSSI values measured by a wireless device connected to AP device 200 with respect to one or more wireless signals communicated between AP device 200 and the wireless device. Although example RSSI techniques are described herein, it shall be understood that any method of measuring wireless signals exchanged between two wireless devices may be used, including any type of Wi-Fi ranging technique and/or Bluetooth ranging technique, and the disclosure is not limited in this respect.

The RSSI values may be used by AP device 200, NMS 130, or both, to estimate a distance between AP device 200 and the one or more other wireless devices in the wireless network. As another example, AP device 200 and one or more other wireless devices may perform round trip time (RTT) (e.g., time-of-flight (ToF)) measurements between each other and may then be used by AP device 200, NMS 130, or both, to estimate the distance between AP device 200 and the one or more other devices in the wireless network. Example Wi-Fi RTT techniques are described by the IEEE 802.11mc (e.g., IEEE 802.11-2016) standard, which defines a fine-time measurement (FTM) protocol that can be used to measure the Wi-Fi signal round trip time (RTT). In some examples, AP device 200 sends the RSSI and/or RTT values to NMS 130, and NMS 130 estimates a distance between AP device 200 and one or more other wireless devices based on the received RSSI and/or RTT values received from each of the other wireless devices. In other examples, AP device 200 estimates the distance between itself and one or more other wireless devices in the wireless network based on the RSSI and/or RTT values, and transmits the estimated distances to NMS 130. The estimated distances between AP device 200 and the one or more other wireless devices may also be determined by any other computing device, and the disclosure is not limited in this respect. In accordance with one or more techniques of the disclosure, NMS 130 may obtain the RSSI and/or RTT values and generate a network graph of wireless devices in a wireless network.

Network data stored in data storage 254 may include, for example, data concerning or associated with AP events and/or UE events. In some examples, the network events are classified as positive network events, neutral network events, and/or negative network events. The network events may include, for example, memory status, reboot events, crash events, Ethernet port status, upgrade failure events, firmware upgrade events, configuration changes, authentication events, DNS events, DHCP events, one or more types of roaming events, one or more types of proximity events, etc., as well as a time and date stamp for each event. Data 254 may store any data used and/or generated by AP device 200, including data collected from UEs 148.

Communications manager 242 includes program code that, when executed by processor(s) 206, allow AP device 200 to communicate with UEs 148 and/or network(s) 134 via any of interface(s) 230 and/or 220A-220B. Configuration settings 250 include any device settings for AP device 200 such as radio settings for each of wireless interface(s) 220A-220B. These settings may be configured manually or may be remotely monitored and/or automatically managed or configured by NMS 130 to optimize wireless network performance on a periodic (e.g., hourly or daily) basis. Input / output (I/O) 210 represents physical hardware components that enable interaction with a user, such as buttons, a touchscreen, a display and the like. Although not shown, memory 212 typically stores executable software for controlling a user interface with respect to input received via I/O 210.

In accordance with the techniques described in this disclosure, one or more configuration settings 250 of AP device 200 are managed by constraints coordination engine 136 of NMS 130 based on one or more operational constraints obtained from AFC server 124. In some examples, AP device 200 may include GPS unit 260 configured to determine the location of AP device 200. For example, GPS device 260 may determine a geographic location of AP device 200, such as geographic coordinates (e.g., longitude, latitude) and/or height of AP device 200. AP device 200 may send location information of AP device 200 to constraints coordination engine 136 of NMS 130, which in turn may send validation information, including the location information of AP device 200, to AFC server 124. While GPS unit 260 is illustrated as internal to AP device 200, GPS unit 260 may, in some examples, be external to GPS unit 260.

In some examples, AP device 200 may not include a GPS unit. In these examples, AP device 200 may perform measurements of wireless signals exchanged between AP device 200 and another AP device, such as signal strength measurements and/or RTT or FTM measurements, and provide the measurements to NMS 130 (or a location engine connected to NMS 130) to determine a location of AP device 200 and send the location information of AP device 200 to constraints coordination engine 136 of NMS 130.

AP device 200 may receive one or more configuration settings from constraints coordination engine 136. For example, AP device 200 may receive configuration settings (or instructions for AP device 200 to modify configuration/radio settings 250) specifying one or more of a frequency or range of frequencies (e.g., channel), a power mode (e.g., transmit antenna output power (e.g., EIRP)), and/or other configuration settings for transmitter 224A. As described above, the configuration settings may be determined by constraints coordination engine 136 based on one or more operational constraints from AFC server 124 and one or more network parameters. In some examples, AP device 200 may include configuration settings 250 that cause AP device 200 to configure transmitter 224A to operate in low power mode or to disable wireless interface 220A if AP device 200 does not receive configuration settings from constraints coordination engine 136 (e.g., due to a connection issue to NMS 130).

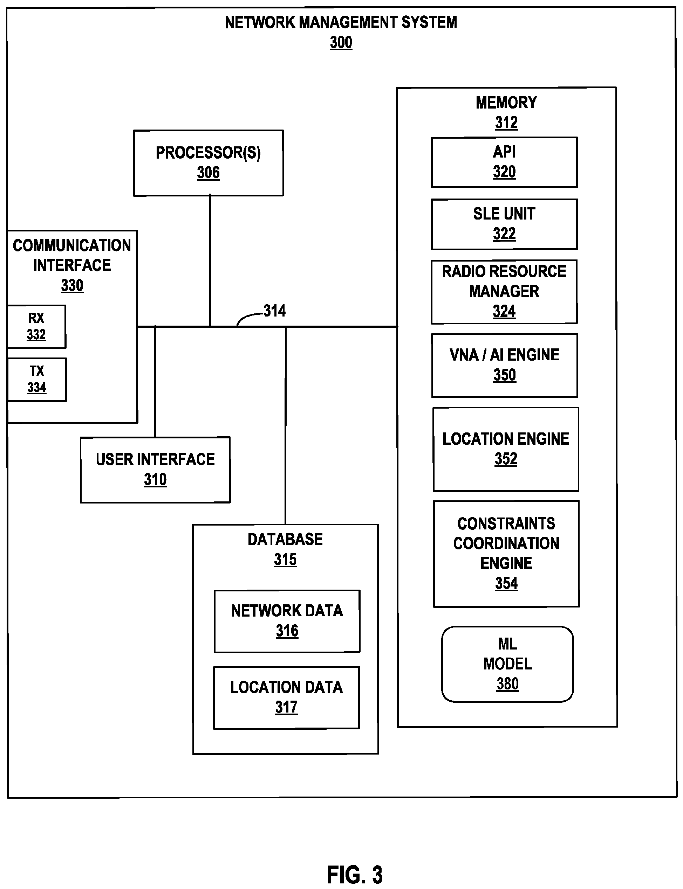

FIG. 3 illustrates an example NMS 300 configured to manage one or more network devices of a network based on one or more operational constraints of an AFC system, in accordance with one or more techniques of this disclosure. NMS 300 and constraints coordination engine 354 may operate substantially similar to NMS 130 and constraints coordination engine 136 of FIG. 1. NMS 300 includes a communications interface 330, one or more processor(s) 306, a user interface 310, a memory 312, and a database 315. The various elements are coupled together via a bus 314 over which the various elements may exchange data and information.

Processor(s) 306 execute software instructions, such as those used to define a software or computer program, stored to a computer-readable storage medium (such as memory 312), such as non-transitory computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein.

Communications interface 330 may include, for example, an Ethernet interface. Communications interface 330 couples NMS 300 to a network and/or the Internet, such as any of network(s) 134 as shown in FIG. 1, and/or any local area networks. Communications interface 330 includes a receiver (RX) 332 and a transmitter (TX) 334 by which NMS 300 receives/transmits data and information to/from any of APs 142, switch 146, servers 110, 116, 122, 128, and/or any other devices or systems forming part of network system 100 such as shown in FIG. 1.

Database 315 may store network data 316 and location data 317 collected and/or measured by devices in a wireless network (e.g., UEs 148 and/or APs 142 of FIG. 1). Network data 316 may include, for example, information indicative of events, anomalies, trends, SLE-related data, and/or any information indicative of a performance of a device or network. Network data 316 may include, for example, signal strength measurements of signals transmitted by an AP device (e.g., AP 142A-N of FIG. 1) and received by another device (e.g., AP 142A-1 of FIG. 1) with which location engine 352 may use to determine the location of the AP device in a site. Location data 317 may include location information (e.g., geographic coordinates, height, etc.) received from an AP device or location information determined by a location engine 352 of NMS 130.

Memory 312 includes one or more devices configured to store programming unit/modules and/or data associated with operation of NMS 300. For example, memory 312 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE unit 322, a radio resource management (RRM) engine 324, a virtual network assistant (VNA)/Al engine 350, and a location engine 352. NMS 300 may also include any other programmed units/modules, software engines and/or interfaces configured for obtaining information associated with wireless signals exchanged within a wireless network of a site and determining a location of wireless devices in the site.

SLE unit 322 enables set up and tracking of thresholds for SLE metrics for each network 106A-106N. SLE unit 322 further analyzes SLE-related data collected by APs, such as any of APs 142 from UEs 148 in each wireless network 106A-106N. For example, APs 142A-1 through 142A-N collect SLE-related data from UEs 148A-1 through 148A-N currently connected to wireless network 106A. This data is transmitted to NMS 300, which executes SLE unit 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored in database 315.

RRM engine 324 monitors one or more metrics for each site 106A-106N in order to learn and optimize the RF environment at each site. For example, RRM engine 324 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine 324 may determine channel and transmit power distribution across all APs 142 in each network 106A-106N. For example, RRM engine 324 may monitor events, power, channel, bandwidth, and number of clients connected to each AP. RRM engine 324 may further automatically change or update configurations of one or more APs 142 at a site 106 with an aim to improve the coverage and capacity SLE metrics and thus to provide an improved wireless experience for the user.

VNA/AI engine 350 may operate substantially similar to VNA 133 of FIG. 1. VNA/Al engine 350 analyzes data received from APs 142/200 as well as its own data to identify when undesired to abnormal states are encountered in one of wireless networks 106A-106N. For example, VNA/Al engine 350 may identify the root cause of any undesired or abnormal states, e.g., any poor SLE metric(s) at one or more of wireless network 106A-106N. In addition, VNA/Al engine 350 may automatically invoke one or more corrective actions intended to address the identified root cause(s) of one or more poor SLE metrics. Examples of corrective actions that may be automatically invoked by VNA/Al engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoke downloading of new software to an AP, switch, or router, etc. These corrective actions are given for example purposes, and the disclosure is not limited in this respect. If automatic corrective actions are not available or do not adequately resolve the root cause, VNA/AI engine 350 may proactively provide a notification including recommended corrective actions to be taken by IT personnel to address the network error.

In accordance with one or more techniques of this disclosure, NMS 300 includes constraints coordination engine 354 that is configured to manage one or more network devices of a network based on one or more operational constraints of AFC server 124. In the example of FIG. 3, constraints coordination engine 354 may send validation information of one or more network devices (e.g., APs 142 of FIG. 1), to AFC server 124 to manage one or more operational constraints of the one or more APs 142 in a 6 GHz frequency band.

In some examples, constraints coordination engine 354 may receive location information of an AP 142 including a GPS unit (e.g., AP 142A-1 of FIG. 1). In some examples, NMS 300 includes a location engine 352 to determine a location of an AP 142 without a GPS unit (e.g., AP 142A-N of FIG. 1) based on a location of one or more other APs 142 with a GPS unit (e.g., neighboring AP device, AP device in the same site, etc.). For example, location engine 352 may determine a location of AP 142A-N that does not include a GPS unit based on the location information of an AP 142A-1 that includes a GPS unit. In some examples, constraints coordination engine 354 may set the location of the AP 142A-N without a GPS unit as the same location as AP 142A-1 with the GPS unit that provided location information to constraints coordination engine 354. In some examples, location engine 352 may determine the location of AP 142A-N without a GPS unit based on measuring signals exchanged between AP 142A-N and another AP 142 (e.g., AP 142A-1 or any other neighboring AP device). For example, location engine 352 may determine the location of AP 142A-N without a GPS unit based on signal strength measurements of one or more signals exchanged between AP 142A-N and the other AP device. In other examples, location engine 352 may determine the location of AP 142A-N without a GPS unit based on RTT and/or FTM of one or more signals exchanged between AP 142A-N and a neighboring AP device.

Constraints coordination engine 352 sends location information of one or more APs 142s, including, in some examples, a location uncertainty value that indicates an amount of uncertainty of the location of the one or more APs 142, to AFC server 124 and may receive one or more operational constraints from AFC server 124 for the one or more APs 142. Based on the one or more operational constraints for one or more APs 142, constraints coordination engine 354 may manage one or more configuration settings for the one or more APs 142. For example, constraints coordination engine 354 may determine configuration settings for an AP 142 based on one or more constraints from AFC server 124 and one or more network parameters, such as a type (e.g., model) of the AP device and/or one or more assessments of the network. Constraints coordination engine 354 may generate one or more configuration settings for channel and transmit power of an AP 142 that complies with the one or more operational constraints from AFC server 124 and based on monitored events, power, channel, bandwidth, and/or number of clients connected to each AP. In some examples, constraints coordination engine 354 may leverage the detection by VNA /Al engine 350 of one or more anomalies in the network (e.g., whether there is a coverage hole, one or more neighboring devices that may interfere with the network device based on a determined location of the one or more neighboring network devices, etc.) to generate one or more configuration settings for an AP 142. In some examples, constraints coordination engine 354 may receive feedback on the performance of the network and may generate one or more configuration settings for an AP 142.

In some examples, constraints coordination engine 354 may generate a channel and/or power distribution for a plurality of network devices. For example, constraints coordination engine 354 may determine a first set of network devices in site 102A (e.g., AP 142A-N) to operate in low power mode and a second set of network devices in site 102A to operate in standard power mode (e.g., AP 142A-1). Constraints coordination engine 354 may additionally, or alternatively, generate a channel distribution for the plurality of network devices to operate in corresponding channels. For, example, constraints coordination engine 354 may determine a first set of network devices in site 102A to operate in a first channel, a second set of network devices in site 102A to operate in a second channel, and so on. Constraints coordination engine 354 may instruct RRM 324 to configure the channel and/or power of the plurality of network devices based on the channel and/or power distribution determined by constraints coordination engine 354.

In some examples, constraints coordination engine 354 may instruct RRM 324 to configure an AP 142 to switch power modes (e.g., switching from standard power mode to low power mode) or to disable the radio (e.g., transmitter) of the AP device when re-requesting for one or more operational constraints for the AP device if constraints coordination engine 354 does not receive a response from AFC server 124 or location engine 352 determines that the network device has moved to a different location.

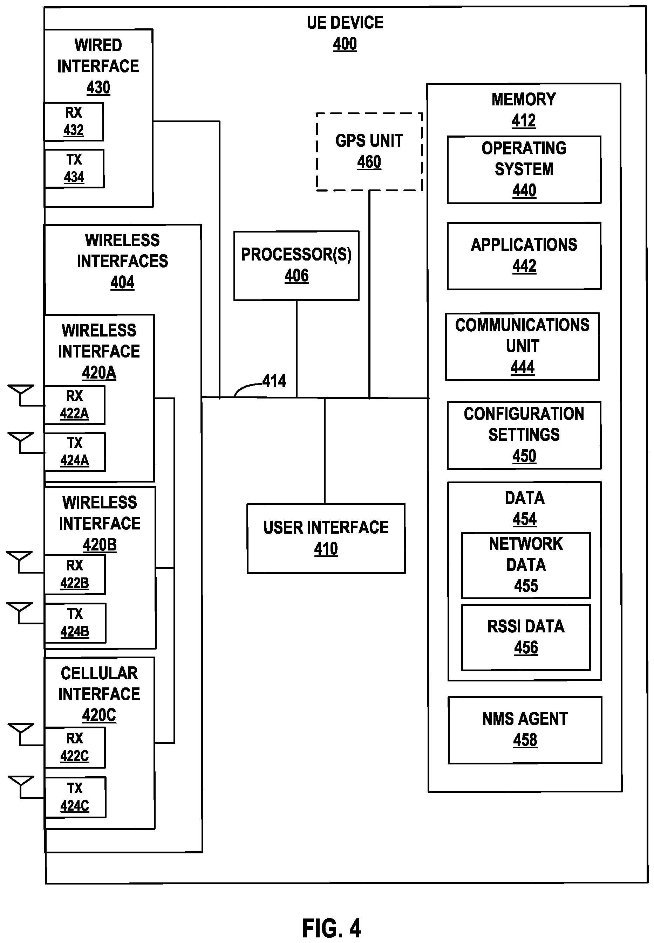

FIG. 4 is a block diagram of an example user equipment device, in accordance with one or more techniques of the disclosure. Example UE device 400 shown in FIG. 4 may be an example of any of UEs 148 as shown and described herein with respect to FIG. 1. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device.

UE device 400 includes a wired interface 430, wireless interfaces 420A-420C, one or more processor(s) 406, memory 412, and a user interface 410. The various elements are coupled together via a bus 414 over which the various elements may exchange data and information. Wired interface 430 represents a physical network interface and includes a receiver 432 and a transmitter 434. Wired interface 430 may be used, if desired, to couple, either directly or indirectly, UE device 400 to a wired network device, such as one of switches 146 of FIG. 1A, within the wired network via a cable, such as an Ethernet cable.

First, second, and third wireless interfaces 420A, 420B, and 420C include receivers 422A, 422B, and 422C, respectively, each including a receive antenna via which UE device 400 may receive wireless signals from wireless communications devices, such as APs 142 of FIG. 1, AP 200 of FIG. 2, other UEs 148, or other devices configured for wireless communication. First, second, and third wireless interfaces 420A, 420B, and 420C further include transmitters 424A, 424B, and 424C, respectively, each including transmit antennas via which UE device 400 may transmit wireless signals to wireless communications devices, such as APs 142 of FIG. 1, AP 200 of FIG. 2, other UEs 148, and/or other devices configured for wireless communication. In some examples, first wireless interface 420A may include a Wi-Fi 802.11 interface (e.g., 2.4 GHz, 5 GHz, and/or 6 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, stored to a computer-readable storage medium (such as memory 412), such as non-transitory computer-readable media including a storage device (e.g., a disk drive, or an optical drive) or a memory (such as Flash memory or RAM) or any other type of volatile or non-volatile memory, that stores instructions to cause the one or more processors 406 to perform the techniques described herein.

Memory 412 includes one or more devices configured to store programming units/modules and/or data associated with operation of UE device400. For example, memory 412 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications unit 444, configuration settings 450, and data storage 454. Communications unit 444 includes program code that, when executed by processor(s) 406, enables UE device 400 to communicate using any of wired interface(s) 430, wireless interfaces 420A-420B and/or cellular interface 420C. Configuration settings 450 include any device settings for UE device 400 settings for each of wireless interface(s) 420A-420B and/or cellular interface 420C.

Data storage 454 may store any data used and/or generated by UE device 400, such as network data 455 including event data (e.g., data indicative of normal events or error events), telemetry data, and/or other SLE-related data indicative of the performance and/or status of the wireless network, and RSSI data 456 including signal strength measurements of one or more wireless signals received by UE device 400 from a network device (e.g., AP 142A-1 of FIG. 1) for determining the location of UE device 400.

In some examples, UE device 400 may represent a fixed (e.g., stationary) device in a site. In these examples, UE device 400 may include an NMS agent 456 configured to cause UE device 400 to request validation by an AFC server via NMS 130 to operate in one or more frequency bands and to be managed by NMS 130. NMS agent 456 is a software agent of NMS 130 that is installed on UE device 400. In some examples, NMS agent 456 can be implemented as a software application running on UE device 400.

In some examples, UE device 400 may include a GPS unit 460 configured to determine the location of UE device 400. For example, GPS device 460 may determine a geographic location of UE device 400, such as geographic coordinates (e.g., longitude, latitude) and/or height of UE device 400. UE device 400 may send location information of UE device 400 to NMS 130, which in turn may send validation information, including the location information of UE device 400, to AFC server 124.

In some examples, UE device 400 may not include a GPS unit. In these examples, an AP device connected to UE device 400 may perform measurements of wireless signals exchanged between UE device 400 and the AP device, such as signal strength measurements and/or RTT or FTM measurements, and provide the measurements to NMS 130 (or a location engine connected to NMS 130) to determine a location of UE device 400 and send the location information of UE device 400 to constraints coordination engine 136 of NMS 130.

UE device 400 may receive one or more configuration settings from constraints coordination engine 136. For example, UE device 400 may receive configuration settings (or instructions for UE device 400 to modify configuration settings 450) specifying one or more of a frequency or range of frequencies (e.g., channel), a power mode (e.g., transmit antenna output power (e.g., EIRP)), and/or other configuration settings for transmitter 424A. As described above, the configuration settings may be determined by constraints coordination engine 136 based on one or more operational constraints from AFC server 124 and one or more network parameters.

In some examples, UE device 400 may include configuration settings 450 that cause UE device 400 to configure transmitter 424A to operate in low power mode or to disable wireless interface 420A if UE device 400 does not receive configuration settings from constraints coordination engine 136 (e.g., due to a connection issue to NMS 130).

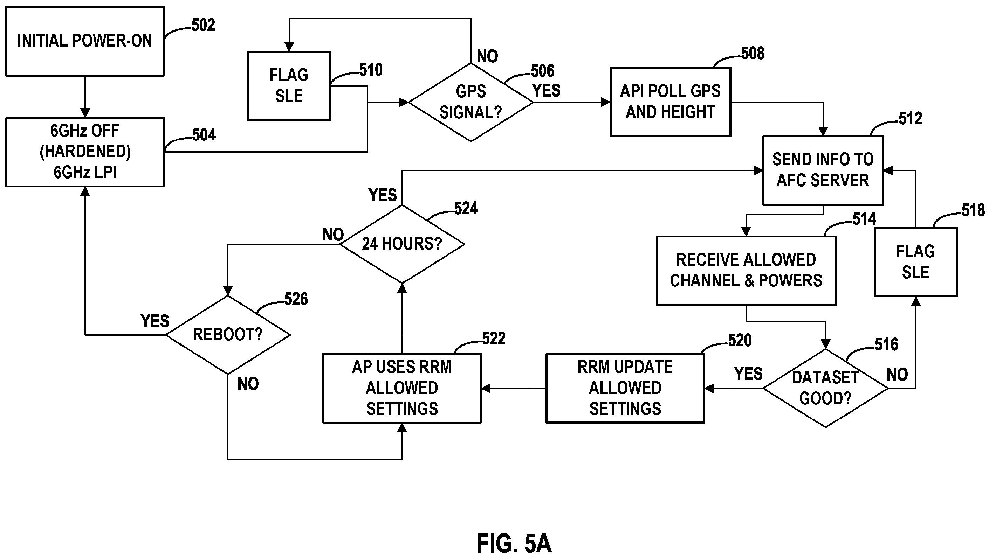

FIG. 5A is a flowchart of an example operation to manage a network device with a GPS unit based on one or more operational constraints of an AFC system, in accordance with one or more techniques of this disclosure. For ease of illustration, FIG. 5A is described with respect to AP 142A-1 of FIG. 1, but may represent any network device in network system 100 of FIG. 1.

In the example of FIG. 5A, a network device, such as AP 142A-1, may be powered on and/or initialized for use within site 102A (502). AP 142A-1 may be configured to operate in a low power mode (Low Power Indoor) prior to requesting to operate in a 6 GHz frequency band via AFC server 124 (504). In this example, AP 142A-1 may include a GPS unit ("YES" in step 506) and NMS 130 may obtain location information of AP 142A-1 from AP 142A-1, such as geographic coordinates and/or height of AP 142A-1 (508). NMS 130 may send validation information of AP 142A-1, including the location information of AP 142A-1, to AFC server 124 (512).

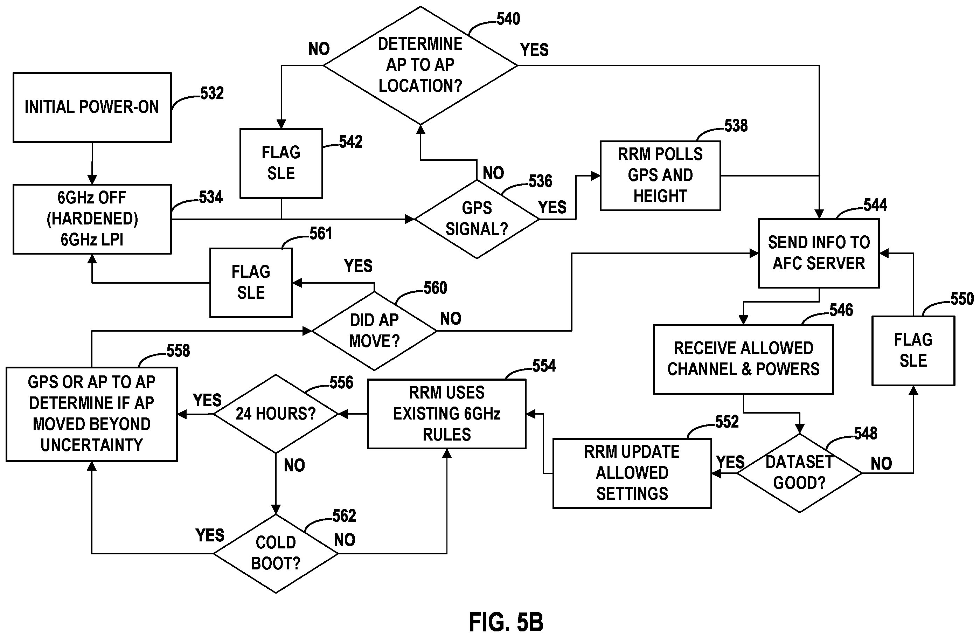

In some examples, a network device, such as AP 142A-N, may not include a GPS unit ("NO" in step 506). In these examples, a flag may be set to indicate location information of AP 142A-N is unavailable (510) and/or NMS 130 may determine the location of AP 142A-N without a GPS unit based on location information of another network device including a GPS unit or based on measuring signals exchanged between AP 142A-N and a neighboring network device (e.g., signal strength measurements, RTT and/or FTM measurements, etc.), as further described in FIG. 5B.

Based on the validation information of AP 142A-1 sent to AFC server 124 in step 512, AFC server 124 may determine one or more operational constraints for AP 142A-1 to operate in a 6 GHz frequency band. The operational constraints for AP 142A-1 may include allowed channels and/or power limits.

NMS 130 may receive the one or more operational constraints for AP 142A-1 from AFC server 124 (514) and determine whether the one or more operational constraints for AP 142A-1 are valid (516). If NMS 130 does not receive a response from AFC server 124 or one or more operational constraints for AP 142A-1 are not valid ("NO" of step 516), a flag may be set to indicate no response is received from AFC server 124 and/or the operational constraints from AFC server 124 are not valid (518).

If NMS 130 receives a response from AFC server 124 or one or more operational constraints for AP 142A-1 are received or valid ("YES" of step 516), NMS 130 may manage one or more configuration settings for AP 142A-1 based on the one or more operational constraints received from AFC server 124 (520). For example, NMS 130 may determine one or more configuration settings for AP 142A-1 based on one or more constraints from AFC server 124 and at least one of a type (e.g., model) of access point and/or one or more assessments of the network (e.g., determine whether there is a coverage hole, determine whether there are one or more neighboring devices that may interfere with AP 142A-1 based on a determined location of the one or more neighboring network devices, etc.). As one example, NMS 130 may receive a power limit of 14 dBm for AP 142A-1. NMS 130 may determine, based on the model of AP 142A-1, that AP 142A-1 supports a standard power mode (e.g., 0 dBm to 30 dBm) and a low power mode (e.g., 0 dBm to 15 dBm). In this example, NMS 130 may determine which power mode for AP 142A-1 to implement and instructs a radio resource manager (e.g., radio resource manager 324 of FIG. 3) to configure the power mode for AP 142A-1.

AP 142A-1 receives the one or more configuration settings from NMS 130 and implements the configuration settings (522). The one or more configuration settings may be implemented for a threshold period of time (e.g., 24 hours or less) (524). If the duration in which the one or more configuration settings are implemented exceeds the threshold period of time ("YES" of step 524), NMS 130 may send validation information of AP 142A-1 to AFC server 124 to obtain one or more operational constraints for AP 142A-1 (512). If the duration in which the one or more configuration settings are implemented does not exceed the threshold period of time ("NO" of step 524), NMS 130 may determine whether to reboot AP 142A-1 to cause AP 142A-1 to switch operation from standard power to low power (526). For example, NMS 130 may determine whether there is a network failure (e.g., failure to connect to NMS 130, failure to connect to AFC server 124, or other network failure). If NMS 130 determines that there is a network failure, NMS 130 may determine to reboot AP 142A-1 ("YES" of step 526), which causes AP 142A-1 to operate in a low power mode upon powering up and/or initializing (504). In some examples, if NMS 130 determines that there is a network failure, NMS may cause AP 142A-1 to disable a transmitter of AP 142A-1. If NMS 130 does not determine that there is a network failure, NMS 130 determines to not reboot AP 142A-1 ("NO" of step 526) and to maintain implementation of the current configuration settings (522).

FIG. 5B is a flowchart of an example operation to manage a network device without a GPS unit based on one or more operational constraints of an AFC system, in accordance with one or more techniques of this disclosure. For ease of illustration, FIG. 5B is described with respect to AP 142A-N of FIG. 1, but may represent any network device in network system 100 of FIG. 1.

In the example of FIG. 5B, a network device, such as AP 142A-N, may be powered on and/or initialized for use within site 102A (532). AP 142A-N may be configured to operate in a low power mode (Low Power Indoor) prior to requesting to operate in a 6 GHz frequency band via AFC server 124 (534). For network devices that include a GPS unit ("YES" of step 536), NMS 130 may obtain the location information of the network device from the network device

(538), as described in FIG. 5A. In some examples, AP 142A-N may not include a GPS unit ("NO" in step 536). In these examples, NMS 130 may determine the location of AP 142A-N based on location information of another network device including a GPS unit (e.g., by setting the location of AP 142A-N as the same location as AP 142A-1 of FIG. 1) or based on measuring signals exchanged between the AP 142A-N and a neighboring network device (e.g., signal strength measurements, RTT and/or FTM measurements, etc.) (540). If NMS 130 is unable to determine the location of AP 142A-N ("NO" of step 540), a flag may be set to indicate location information of AP 142A-N is unavailable (542).

If NMS 130 determines the location of AP 142A-N (e.g., "YES" of step 538 by receiving location information of another network device including a GPS unit or "YES" of step 540 by determining the location based on measuring signals exchanged between AP 142A-N and a neighboring network device), NMS 130 may send validation information of AP 142A-N, including the location information of AP 142A-N, to AFC server 124 (544). AFC server 124 may determine one or more operational constraints for AP 142A-N to operate in a 6 GHz frequency band based on the validation information of AP 142A-N. The operational constraints for AP 142A-1 may include allowed channels and/or power limits.

NMS 130 may receive the one or more operational constraints for AP 142A-N (546) and determine whether the one or more operational constraints for AP 142A-N are valid (548). If NMS 130 does not receive a response from AFC server 124 or one or more operational constraints for AP 142A-N are not valid ("NO" of step 548), a flag may be set to indicate no response is received from AFC server 124 and/or the operational constraints from AFC server 124 are not valid (550). If NMS 130 receives a response from AFC server 124 or one or more operational constraints for AP 142A-N are received or valid ("YES" of step 548), NMS 130 may manage one or more configuration settings for AP 142A-N based on the one or more operational constraints received from AFC server 124 (552). For example, NMS 130 may determine one or more configuration settings for AP 142A-N based on one or more constraints from AFC server 124 and at least one of a type (e.g., model) of access point and/or one or more assessments of the network (e.g., determine whether there is a coverage hole, determine whether there are one or more neighboring devices that may interfere with AP 142A-N based on a determined location of the one or more neighboring network devices, etc.). As one example, NMS 130 may determine, based on the model of AP 142A-N, which power mode for AP 142A-N to implement and instructs a radio resource manager (e.g., radio resource manager 324 of FIG. 3) to update the power mode for AP 142A-N.

AP 142A-N receives the one or more configuration settings from NMS 130 and implements the configuration settings (554). The one or more configuration settings may be implemented for a threshold period of time (e.g., 24 hours or less) (556). If the duration in which the one or more configuration settings are implemented exceeds the threshold period of time ("YES" of step 556), NMS 130 may determine whether AP 142A-N has moved (558, 560). For example, NMS 130 may determine the location of AP 142A-N and determine whether the location of AP 142A-N satisfies a threshold amount of uncertainty. If NMS 130 determines that AP 142A-N has moved ("YES" of step 560), NMS 130 may set a flag to indicate AP 142A-N has moved and/or may configure AP 142A-N to operate in low power mode (534). If NMS 130 determines that AP 142A-N has not moved ("NO" of step 560), NMS 130 may send validation information of AP 142A-N to AFC server 124 to obtain one or more operational constraints for AP 142A-N (544).

If the duration in which the one or more configuration settings are implemented does not exceed the threshold period of time ("NO" of step 556), NMS 130 may determine whether to reboot AP 142A-N to cause AP 142A-N to switch operation from standard power to low power (562). For example, NMS 130 may determine whether there is a network failure (e.g., failure to connect to NMS 130 or other network failure). If NMS 130 determines that there is a network failure, NMS 130 may determine to reboot AP 142A-N ("YES" of step 562), which causes AP 142A-N to operate in a low power mode upon powering up and/or initializing (534). In some examples, if NMS 130 determines that there is a network failure, NMS may cause AP 142A-N to disable a transmitter of AP 142A-N. If NMS 130 does not determine that there is a network failure, NMS 130 determines to not reboot AP 142A-N ("NO" of step 562) and to maintain implementation of the current configuration settings (554).

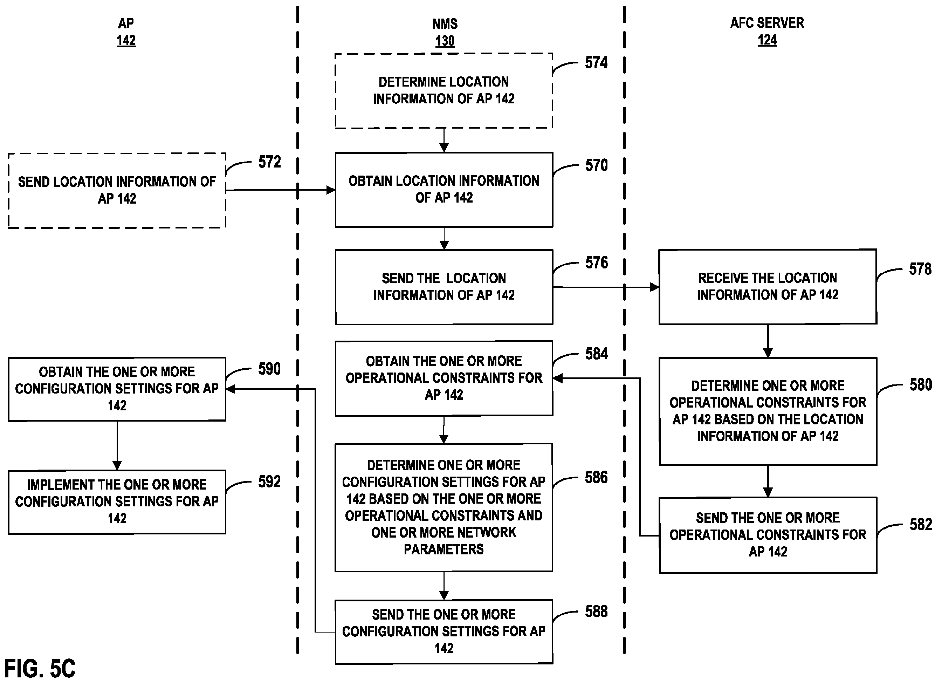

FIG. 5C is a flowchart of an example operation to manage a network device based on one or more operational constraints of an AFC system, in accordance with one or more techniques of this disclosure. For ease of illustration, FIG. 5C is described with respect to any of APs 142, NMS 130 and AFC server 124 of FIG. 1.

In the example of FIG. 5C, NMS 130 obtains location information of one or more network devices, such as any of APs 142 (570). In some example, NMS 130 may receive location information from a network device including a GPS unit (e.g., AP 142A-1) (572). In some examples, NMS may determine location information of a network device that does not include a GPS unit (e.g., AP 142A-1) (574). For example, NMS 130 may determine the location of the network device without a GPS unit based on location information of another network device including a GPS unit (e.g., a neighboring network device, a network device in the same site, etc.).

NMS 130 sends the location information of AP 142 to AFC server 124 (576). For example, NMS 130 may send location (e.g., coordinates, height, etc.) of AP 142 and, in some examples, planned frequencies or power to be used by AP 142 to AFC server 124. AFC server 124 receives the location information of AP 142 (578) and determines one or more operational constraints for AP 142 based on the location information of AP 142 (580). For example, AFC server 124 may determine a channel and/or power limit for AP 142 to operate in one or more frequency bands (e.g., 6 GHz frequency band). AFC server 124 sends the one or more operational constraints for AP 142 to NMS 130 (582).

NMS 130 obtains the one or more operational constraints for AP 142 (584) and determines one or more configuration settings for AP 142 based on the one or more operational constraints and one or more network parameters (586). For example, NMS 130 may determine configuration settings for AP 142 based on one or more constraints from AFC server 126 and one or more network parameters, such as a type (e.g., model) of AP 142 and/or one or more assessments of the network (e.g., whether there is a coverage hole, whether one or more neighboring devices that may interfere with the network device based on a determined location of the one or more neighboring network devices, client connectivity to the network device, capability of the network device, demand of the network device, feedback on the performance of the network, etc.).

NMS 130 sends the one or more configuration settings to AP 142 (588). The network device, e.g., AP 142, obtains the one or more configuration settings for AP 142 (590) and implements the one or more configuration settings (592).

In some examples, steps 570 through 592 are repeated when re-requesting for one or more operational constraints for AP 142. For example, the one or more configuration settings may be implemented for a specified period of time. Upon expiration of the specified period of time, NMS 130 may send validation information of AP 142 to AFC server 124 to obtain one or more operational constraints for AP 142. If NMS 130 does not receive a response from AFC server 124, NMS 130 may configure AP 142 to implement a low power mode or disable the radio. Alternatively, if AP 142 does not receive configuration settings from NMS 130 (e.g., due to a connection issue to NMS 130), AP 142 may implement a low power mode or to disable the radio.

Thus, from one perspective, there have now been described techniques for management of one or more network devices of a network based on one or more operational constraints in an Automated Frequency Coordination (AFC) system. For example, a network management system (NMS) is configured to obtain location information of the one or more network devices and sends the location information of the one or more network devices to the AFC server. The AFC server may determine one or more operational constraints for the one or more network devices and sends the one or more operational constraints to the NMS, which in turn may determine one or more configuration settings for the one or more network devices based on the one or more operational constraints and one or more network parameters, and send the one or more configuration settings to the one or more network devices.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random-access memory (RAM), read-only memory (ROM), non-volatile random-access memory (NVRAM), electrically erasable programmable read-only memory (EEPROM), Flash memory, magnetic or optical data storage media, and the like. In some examples, an article of manufacture may comprise one or more computer-readable storage media. Additionally, or alternatively, a computer-readable medium can include transient media such as carrier waves and transmission media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software units/modules or hardware units/modules.

## Claims

1. A network management system, comprising:
memory; and
one or more processors coupled to the memory, the one or more processors configured to:
obtain location information of one or more network devices of a network;
send, to an Automated Frequency Coordination, AFC, server, the location information of the one or more network devices;
obtain, from the AFC server, one or more operational constraints for the one or more network devices;
determine one or more configuration settings for the one or more network devices based on the one or more operational constraints and one or more network parameters; and
send the one or more configuration settings to the one or more network devices.

2. The network management system of claim 1, wherein to obtain location information of one or more network devices, the one or more processors are configured to:
obtain, from a network device of the one or more network devices, location information of the network device determined by a global positioning satellite, GPS, module of the network device.

3. The network management system of claim 1, wherein to obtain location information of one or more network devices, the one or more processors are configured to:
determine, based on location information of a first network device of the one or more network devices, location information of a second network device of the one or more network devices, wherein the first network device includes a global positioning satellite, GPS, module and the second network device does not include a GPS module.

4. The network management system of claim 1, wherein to obtain location information of one or more network devices, the one or more processors are configured to:
determine, based on one or more measurements of one or more wireless signals exchanged between a first network device of the one or more network devices and a second network device of the one or more network devices, location information of a first network device, wherein the first network device does not include a GPS module.

5. The network management system of claim 4, wherein the one or more measurements of the one or more wireless signals comprises one or more of a signal strength measurement, a round-trip time measurement, or a fine time measurement.

6. The network management system of any of claims 1-5,
wherein the one or more operational constraints comprise a power limit for a network device of the one or more network devices,
wherein the power limit for the network device overlaps with a first power mode and a second power mode, and
wherein to determine one or more configuration settings for the one or more network devices based on the one or more operational constraints and one or more network parameters, the one or more processors are configured to determine a power mode from among the first power mode and the second power mode for the network device based on one or more network parameters associated with the network device.

7. The network management system of claim 6, wherein the one or more network parameters associated with the network device comprise one or more of a type of network device, client connectivity to the one or more network devices, capability of the one or more network devices, demand of the one or more network devices, or feedback on a performance of the network.

8. The network management system of any of claims 1-5, wherein to determine the one or more configuration settings for the one or more network devices based on the one or more operational constraints and one or more network parameters, the one or more processors are configured to:
generate one or more of a channel distribution or a power distribution for the one or more network devices.

9. The network management system of any of claims 1-5, wherein the one or more processors are further configured to:
determine that one or more operational constraints for a network device of the one or more network devices are not received from the AFC server; and
based on determining that the one or more operational constraints for the network device of the one or more network devices are not received from the AFC server, send instructions to the network device to cause the network device to at least one of implement a low power mode, reboot, disable a transmitter of the network device, or a combination thereof.

10. The network management system of any of claims 1-5,
wherein location information of one or more network devices comprises a first location information of a network device of the one or more network devices,
wherein the one or more processors are further configured to:
obtain a second location information of the network device of the one or more network devices;
determine that the second location information of the network device is different than the first location information of the network device; and
based on determining that the second location information of the network device is different than the first location information of the network device, send instructions to the network device to cause the network device to at least one of implement a low power mode, reboot, disable a transmitter of the network device, or a combination thereof.

11. A method, comprising:
obtaining, by a network management system, location information of one or more network devices of a network;
sending, by the network management system and to an Automated Frequency Coordination, AFC, server, the location information of the one or more network devices;
obtaining, by the network management system and from the AFC server, one or more operational constraints for the one or more network devices;
determining, by the network management system, one or more configuration settings for the one or more network devices based on the one or more operational constraints and one or more network parameters; and
sending, by the network management system, the one or more configuration settings to the one or more network devices.

12. The method of claim 11, further comprising steps corresponding to the functionality recited in any of claims 2-10.

13. A computer-readable storage medium encoded with instructions for causing one or more programmable processors to become configured to perform the method recited by any of claims 11-12.
